# EUROPEAN PATENT SPECIFICATION

(11) **EP 1 993 272 B1**
(45) Date of publication and mention of the grant of the patent: **24.11.2010**
(21) Application number: 08162933.9
(22) Date of filing: 14.10.2005
(51) Int. Cl.: H04M 1/725, G10H 7/00

(54) **Audio management in a dual processor environment**
Audioverwaltung in einer Dualprozessorumgebung
Gestion audio dans un environnement biprocesseur

(43) Date of publication of application: 19.11.2008
(62) Divisional of application: 05109572.7
(73) Proprietor: RESEARCH IN MOTION LIMITED, Waterloo, Ontario N2L 3W8 (CA)
(72) Inventor: Fu, Runbo, Kanata, Ontario K2M 2X3 (CA); Rao, Krishna, Cupertino, CA 95014 (US); Tian, Hongchang, Kanata, Ontario K2M 2R7 (CA)
(74) Representative: Moore, Barry

(56) References cited:
- US-A1- 2004 203 976
- US-A1- 2004 236 927
- US-A1- 2005 136 992
- KENNETH BOYCE: "Cellular Handset Audio Evolution - pt3" AUDIO DESIGNLINE, 29 August 2005 (2005-08-29), XP002370800
- WAVEARTS: "Mobilesynth, Ringtone and Game Audio for the Mobies Devices" PRODUCT INFORMATION, 14 October 2004 (2004-10-14), XP002370801

## Description

The present application relates generally to audio functionality in a dual processor wireless device, and more specifically to a method and apparatus for controlling audio output on a dual processor wireless device.

Mobile or wireless devices are increasingly becoming used for a variety of tasks. These tasks may require different hardware and configurations in order to run more efficiently, and in some cases the different hardware is comprised of various processors having specialized tasks. For example, one processor may be used to run user applications, while a second may be used for control of the radio and voice path on the mobile device.

In multi-processor environments where the audio path may be generated from either of an application processor (controller processor) or a radio processor, a complex series of tasks need to occur in order to produce the audio output at one of a plurality of audio outputs. This is further complicated if additional hardware such as an audio chip, referred to herein as a Melody chip, is added. With the above dual processor configuration, the Melody chip is controlled by the application processor.

The audio source with the above configuration can be either the Melody chip or a voice codec. In this case, the analog output from the Melody chip needs to be amplified before being sent through a multiplexer to choose between the Melody chip and the voice codec chip output. Once multiplexed, the audio can go to the output, such as a speaker, headset, handset, Bluetooth^{™} or any other such audio output. This requires considerable hardware and coordination in the output of the audio.

US2005/0136992 discloses an auxiliary hardware device that may be shared between two processors in a mobile device, for example, to reduce power consumption. As one example, the auxiliary hardware device may be a codec. The processors may have an interface to independently access the auxiliary hardware device. As a result, it may be unnecessary to power up both processors to access the share auxiliary hardware device.

A publication entitled "Cellular Handset Audio Revolution - pt3" by Kenneth Boyce, Audio Design Line, August 29, 2005, discloses a synthesizer with an output to an audio subsystem. The synthesizer is controlled by an analog baseband processor.

### GENERAL

The present method and apparatus addresses deficiencies of the prior art by providing for a highly integrated audio codec within the dual processor environment. Control of the highly integrated audio codec (HIAC) is accomplished through the radio processor. Further, user applications can take control of the audio output through control signals between the application processor and the radio processor. The ordering of these control signals is important in order to ensure unwanted noise is avoided.

The use of a HIAC integrated circuit may provide flexibility and savings by ensuring that amplifier circuits, as well as audio path control circuits, can be used for input from both a Melody chip and from a radio processor.

The present application therefore provides, a method of audio control for a dual processor mobile device as claimed in claim 1. Advantageous features are provided in the dependent claims.

A mobile device in accordance with claim 9 is also provided. Advantageous features are provided in the claims dependent thereto.

A computer program product in accordance with claim 17 is also provided. A wireless communication system in accordance with claim 18 is also provided.

### BRIEF DESCRIPTION OF THE DRAWINGS

The present application will be better understood with reference to the drawings in which:
**Figure 1** is a block diagram of an audio path showing the problems associated with having two audio or input sources being propagated to a multitude of audio output sources;
**Figure 2** shows a block diagram of a preferred embodiment of the present apparatus;
**Figure 3** shows an alternative embodiment in which a Bluetooth^{™} chip is added to the embodiment of **Figure 2**;
**Figure 4** shows a block diagram of an exemplary mobile device incorporating the present method and apparatus; and
**Figure 5** is a state diagram showing various states according to the present method.

### DESCRIPTION OF PREFERRED EMBODIMENTS

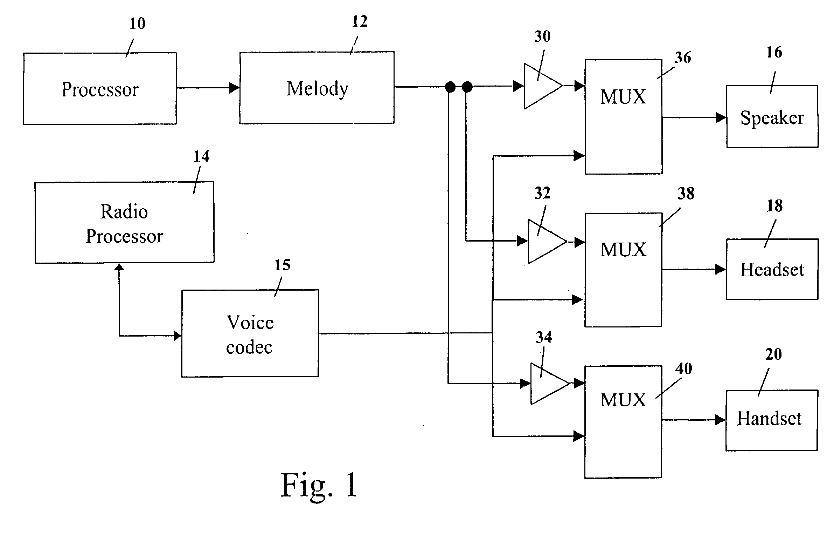

Reference is now made to **Figure 1**. Mobile devices include a variety of chips in order to accommodate the various functionalities required of the mobile device. In data devices it is sometimes preferable to include dual processors, , where a first processor is used for digital signal processing and interfacing with the radio circuitry on the mobile device. The second processor is preferably an application processor that is used to run various user applications.

In one embodiment, other chips can also be added for specialized purposes. For example, a polyphonic audio chip, referred to in the art as a Melody chip, can be used to play a musical instrument digital interface (MIDI) format file, WAV files, certain voice files, MP3 files, advanced audio coding(AAC) files or other types of audio files known to those skilled in the art.

Referring to **Figure 1****,** an application processor **10** controls the Melody chip **12.** This is a preferred embodiment since many of the applications that require the processing of the Melody chip would be run on application processor **10.**

A second processor, referred to herein as a radio processor **14,** is used to control the voice path and the radio. Radio processor **14** preferably includes a DSP and interacts with a voice codec **15** as illustrated in **Figure 1****.**

As will be appreciated by those skilled in the art, a voice call will be generally processed by radio processor **14** and the audio output from this call will proceed to various output sources such as a speaker **16,** a headset **18** or a handset speaker **20.**

The problem with the above is that the analog output from Melody chip **12** needs to also go to speaker **16,** headset **18** or handset **20.** In order to accomplish this, the solution of **Figure 1** shows that the Melody output is first sent through an amplifier **30, 32** or **34** and into a multiplexer **36, 38** or **40.** At the multiplexer **36, 38** or **40** the signal is multiplexed with the signal from radio processor **14** to determine which signal should be output to speaker **16,** headset **18** or handset **20.**

The solution of **Figure 1** thus requires three separate audio amplifiers and three multiplexers to be able to multiplex with the voice codec. This thus is a costly solution and does not allow easy expansion of the circuit for additional audio inputs or outputs.

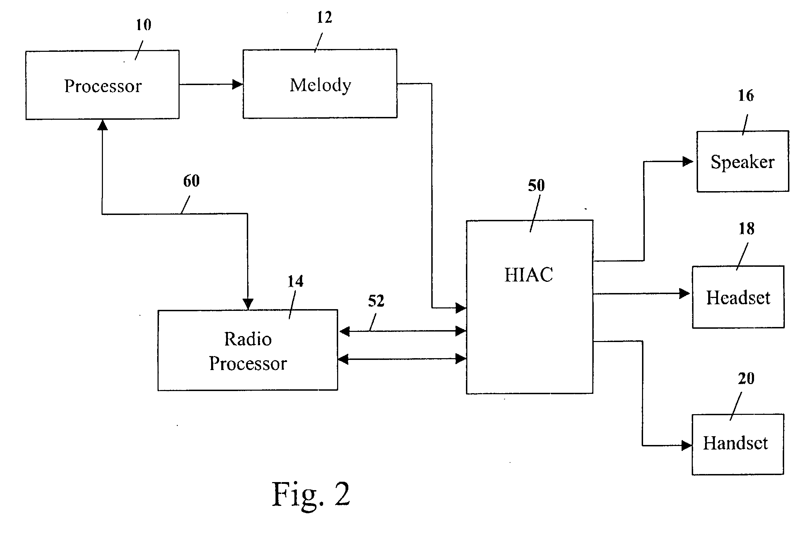

Reference is now made to **Figure 2. Figure 2** shows a preferred embodiment of the present apparatus. In **Figure 2****,** application processor **10** interacts with Melody chip **12** to produce an analog output that is sent to a highly integrated audio codec **50** (HIAC **50).** HIAC **50** provides a variety of functionality including a voice codec, as well as a multiplexer and amplifier all built in to the same chip.

Radio processor **14** further provides a digital input to HIAC **50.**

As will be appreciated by those skilled in the art, in order to ensure that control of the audio path is maintained and that noise is reduced or eliminated, synchronization needs to occur between application processor **10** and radio processor **14.**

In the preferred embodiment of **Figure 2****,** radio processor **14** includes a control line **52** for controlling the serial peripheral interface^{™} (SPI) of HIAC **50.** This can be used to send HIAC **50** instructions such as which line to use as the audio input, which line to use as the audio output, volume control instructions, as well as other instructions known in the art.

As would be appreciated, an alternative embodiment allows application processor **10** to have primary control of HIAC **50** and the present application is not meant to be limited to one chip having control of HIAC **50** over the other.

For application processor **10** to give control to an audio output such as speaker **16,** headset **18** or handset **20** to a Melody chip **12,** synchronization needs to occur between application processor **10** and radio processor **14.** This is accomplished through a communications link **60.**

In a preferred embodiment, communications link **60** acts as a modem. AT commands can be sent between the application processor **10** and the radio processor **14.** Those skilled in the art will realize that AT commands are not the only form of communication that could be used, but rather any form of interprocessor communication could be utilized, and AT commands are used as an example only herein. These commands can indicate to the radio processor that the application processor wishes to take control of the HIAC **50** to send audio out, control volume, select the audio output hardware, or that the application processor is done with HIAC **50.**

In an exemplary situation, a user wishes to perform a function that requires Melody chip **12** to output a sound to speaker **16.** In order for this to be accomplished, application processor **10** sends an AT command to radio processor **14** first switching the output path to speaker **16.**

Once the application processor **10** receives an acknowledgement that the output path has been switched to speaker **16,** application processor **10** next switches the audio input for the HIAC **50** to be from Melody **12.** This can be done by identifying an external input source on HIAC **50** to be the location that HIAC **50** should receive its audio stream from.

Once radio processor **14** receives the command to switch the audio path, it then sends the appropriate command to the HIAC **50** to use the audio stream from Melody chip **12.**

The above can be summarized by the processor sending following:

| | |
|---|---|
| AT+AUDIOOUTPUT | This switches the output path to a perimeter specified in this command. |
| AT+MULTIMEDIA=1, "EXT:O" | This changes the source at HIAC **50** to be external port 0 and tells HIAC **50** to play what=s at external source 0. |

Once Melody chip **12** is finished playing whatever audio is required by application processor **10,** then application processor **10** can tell radio processor **14** to stop playing. This can be sent with a command such as AT+MULTIMEDIA=0, where this command tells the HIAC **50** to stop playing.

As will be appreciated by those skilled in the art, in some cases the audio that is currently playing may need to be interrupted by other audio. For example, if a telephone call is received while audio is being played by Melody chip **12,** the audio source from Melody chip **12** may need to stop. In this case, a stop command can be sent from application processor **10** to radio processor **14** before the new audio source is specified and a start command is issued.

The above sequence is also important. If the path is not switched before a source is specified then the audio output may create a noise such as a "pop". This is undesirable and therefore should be avoided. Thus it is important to first of all switch the audio path and then to switch the source.

Other commands that may be important between application processor **10** and radio processor **14** include a volume control. As will be appreciated by those skilled in the art, volume can be controlled at either Melody chip **12** or at the HIAC **50.** If it is controlled at HIAC **50** then a command from application processor **10** such as AT+VOLUME can be sent to radio processor **14,** which can then use control line **52** in order to control the volume output from HIAC **50.**

Output from radio processor **14** is digital and if this source is to be used, HIAC **50** can be set appropriately using a control line **52.**

Exemplary commands to the radio processor **14** from an application processor **10** could therefore be:
1. Pre-Melody audio output switching
   AT+AUDIOOUTPUT=x
   (x = 2-Speaker, 3-Headset, 4-Handset and 5-BlueTooth Headset)
2. Pre-Melody audio volume setting
   AT+VOLUME=x,y
   (x is the same def. as the above in step 1 and y is between 0 to 7)
3. Pre-Melody audio source switching to melody and change gain settings
   AT+AUDIOOUTPUT=2 (if not set the above)
   AT+MU LTIM EDIAGAI N=0,0,10,13,13,0,0
   0-Table # and currently use 0
   0-ain unused in Warbler
   10- Speaker gain
   13- Headset gain
   13- Handset gain
   0- BlueTooth Headset gain
   0- Bluetooth Carkit gain
4. Send AT request to patriot to play melody
   AT+MULTIMEDIA=1,"EXT:0"
5. Send AT request to patriot to switch audio source to patriot
   AT+MULTIMEDIA=0
6. Post-Melody audio input switching and volume setting
   AT+AUDIOOUTPUT=x (the same as before melody playing)
   AT+VOLUME=x,y

The above is not meant to be limiting. Various numbers of audio outputs could be available. Three audio outputs are illustrated merely for convenience and various other audio outputs may be possible.

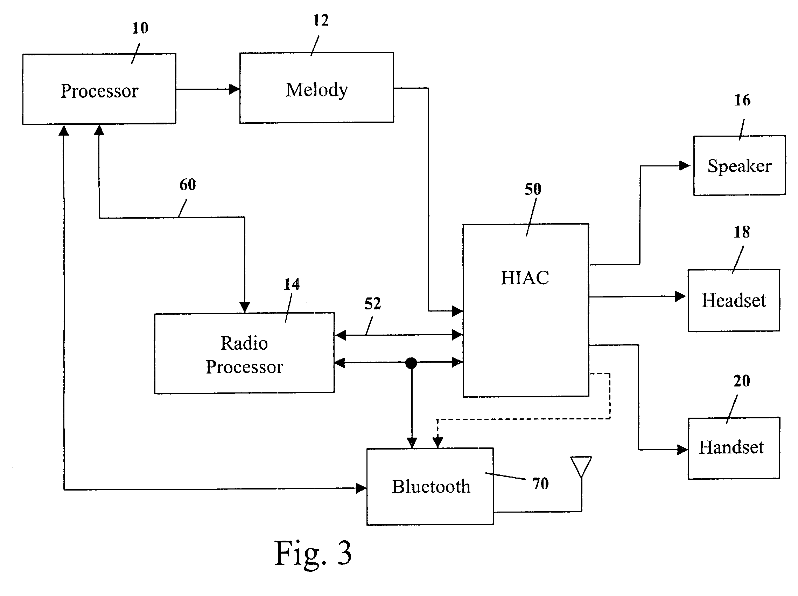

Reference is now made to **Figure 3****.** If the user wishes to also use a Bluetooth^{™} chip in order to provide a further audio output, this can be accomplished by adding a Bluetooth^{™} chip **70** as seen in **Figure 3****.** The remaining components of **Figure 3** are identical to those of **Figure 2** and similar numbering is used.

Bluetooth^{™} chip **70** can receive audio input from either radio processor **14** or as a separate audio output from HIAC **50.**

The above therefore provides for a single HIAC **50** to replace multiple amplifiers and multiplexers. HIAC **50** further provides for multiple audio paths. The above also provides for the synchronization between a multiprocessor environment in which one processor is an application processor and therefore controls user applications, and the other is a radio processor in which voice audio can be processed and output from.

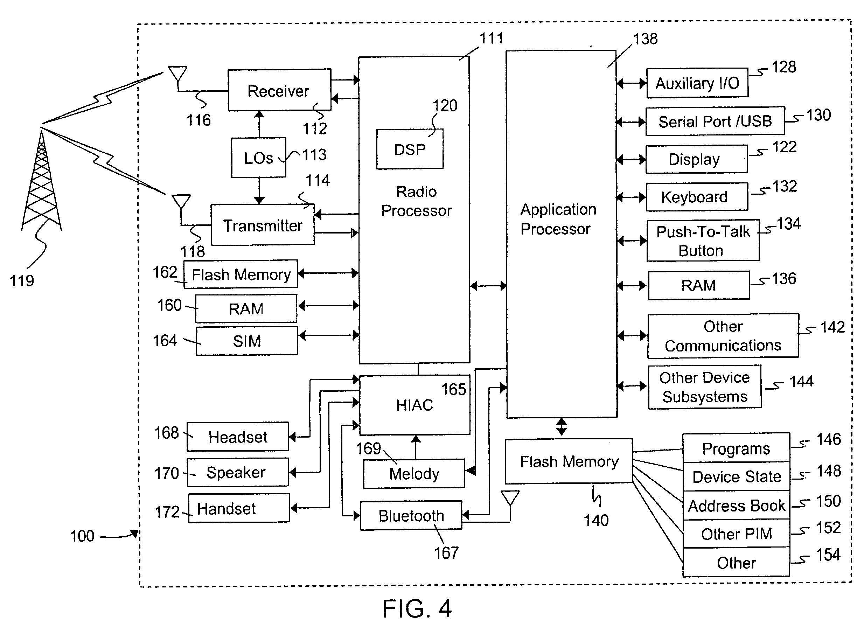

Reference is now made to **Figure 4. Figure 4** is a block diagram illustrating a mobile station including preferred embodiments of the apparatus and method of the current application. Mobile station **100** is preferably a two-way wireless communication device.

Mobile station **100** incorporates a communication subsystem having both a receiver **112** and a transmitter **114,** as well as associated components such as one or more, preferably embedded or internal, antenna elements **116** and **118,** local oscillators (LOs) **113,** and a processing module such as a digital signal processor (DSP) **120.**

As will be apparent to those skilled in the field of communications, the particular design of the communication subsystem will be dependent upon the communication network in which the device is intended to operate.

When required network registration or activation procedures have been completed, mobile station **100** may send and receive communication signals over the network **119.** Signals received by antenna **116** through communication network **119** are input to receiver **112,** which may perform such common receiver functions as signal amplification, frequency down conversion, filtering, channel selection and the like, and in the example system shown in **Figure 4****,** analog to digital (A/D) conversion. A/D conversion of a received signal allows more complex communication functions such as demodulation and decoding to be performed in the DSP **120.**

In a similar manner, signals to be transmitted are processed, including modulation and encoding for example, by DSP **120** and input to transmitter **114** for digital to analog conversion, frequency up conversion, filtering, amplification and transmission over the communication network **119** via antenna **118.** DSP **120** not only processes communication signals, but also provides for receiver and transmitter control. For example, the gains applied to communication signals in receiver **112** and transmitter **114** may be adaptively controlled through automatic gain control algorithms implemented in DSP **120.**

Mobile station **100** preferably includes a radio processor **111** and a microprocessor **138,** which together control the overall operation of the device. DSP **120** is located on radio processor **111.** Communication functions are performed through radio processor **111.**

Radio processor **111** interacts with receiver **112** and transmitter **114,** and further with flash memory **162,** random access memory (RAM) 160, the subscriber identity module **164,** and a highly integrated audio codec **165** (HIAC **165).**

A headset **168,** a speaker **170,** and a handset **172** and a Bluetooth^{™} chip **167** all interact through the HIAC **165.**

Application processor **138** interacts with further device subsystems such as the display **122,** flash memory **140,** random access memory (RAM) **136,** auxiliary input/output (I/O) subsystems **128,** serial port or USB **130,** keyboard **132,** push to talk button **134,** other communications **142** and other device subsystems generally designated as **144.**

Some of the subsystems shown in **Figure 4** perform communication-related functions, whereas other subsystems may provide "resident" or on-device functions. Notably, some subsystems, such as keyboard **132** and display **122,** for example, may be used for both communication-related functions, such as entering a text message for transmission over a communication network, and device-resident functions such as a calculator or task list.

Software used by radio processor **111** and application processor **138** is preferably stored in a persistent store such as flash memory **140** and **162,** which may instead be a read-only memory (ROM) or similar storage element (not shown). Those skilled in the art will appreciate that the operating system, specific device applications, or parts thereof, may be temporarily loaded into a volatile memory such as RAM **136** and RAM **160.** Received communication signals may also be stored in RAM **136.**

As shown, flash memory **140** can be segregated into different areas for computer programs **146,** device state **148,** address book **150,** other personal information management (PIM) **152** and other functionality generally designated as **154.** These different storage types indicate that each program can allocate a portion of flash memory **140** for their own data storage requirements. Application processor **138,** in addition to its operating system functions, preferably enables execution of software applications on the mobile station.

For voice communications, overall operation of mobile station **100** is similar, except that received signals would preferably be output to a speaker **170** or headset **168** and signals for transmission would be generated by a microphone **172.** Alternative voice or audio I/O subsystems, such as a voice message recording subsystem, may also be implemented on mobile station **100.** Further speaker **170** could be either a loud speaker for use with, for example, hands free operation or conference calling, or could be the handset speaker that a user could put to his or her ear.

Serial port or USB **130** in **Figure 4** would normally be implemented in a personal digital assistant (PDA)-type mobile station for which synchronization with a user's desktop computer (not shown) may be desirable, but is an optional device component. Such a port or USB **130** would enable a user to set preferences through an external device or software application and would extend the capabilities of mobile station **100** by providing for information or software downloads to mobile station **100** other than through a wireless communication network. The alternate download path may for example be used to load an encryption key onto the device through a direct and thus reliable and trusted connection to thereby enable secure device communication.

Other communications subsystems **144,** such as a short-range communications subsystem, is a further optional component which may provide for communication between mobile station **100** and different systems or devices, which need not necessarily be similar devices. For example, the subsystem **144** may include an infrared device and associated circuits and components or a Bluetooth^{™} communication module to provide for communication with similarly enabled systems and devices.

Alternatively, the Biuetooth^{™} communication module could be module **167** communicating with HIAC **165** and receiving control from control application processor **138.**

A Melody Chip **169** interacts with HIAC 165 and further is controlled by application processor **138** as described above.

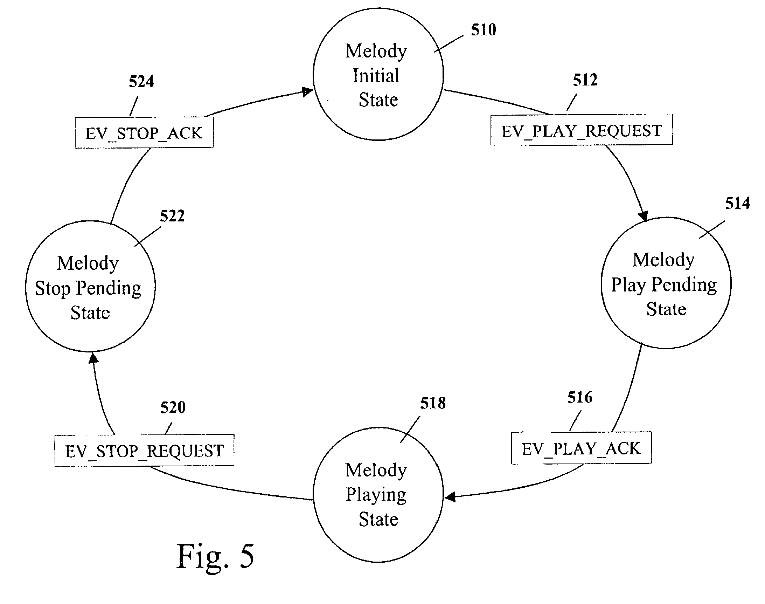

Reference is now made to **Figure 5. Figure 5** shows a state diagram for various states for the Melody chip. The Melody chip originally starts in Melody initial state **510.** If an event play request is made from a controlling application processor, the melody chip sends an event play request (EV_PLAY__REQUEST) **512.** The Melody chip proceeds into a Melody Play Pending state **514.**

Until acknowledgement of the play request is received back at the Melody Chip, the Melody chip will stay in the play pending state. Once the event play acknowledgement **516** is received, the chip next proceeds into a Melody Playing State **518.**

In Melody playing state **518,** the audio input to the HIAC **50** comes from Melody chip **12** as best seen in **Figure 2****.** Once the Melody chip completes playing of the file being played, an event stop request **520** is sent. The event stop request causes the Melody chip to proceed into a Stop Pending State **522** until an Event Stop Acknowledgement **524** is received.

Once the Event Stop Acknowledgement is received, the Melody chip proceeds back into a Melody Initial State **510** and waits for the next play request.

As will be appreciated by those skilled in the art, the event stop request **520** can also be generated when competing audio sources require that an audio source pre-empt the current Melody playing state.

The above describes an Audio state machine. As will be appreciated, the above may be affected by the Radio finite state machine.

The above described embodiments of the present application are meant to be illustrative of preferred embodiments and are not intended to limit the scope of the present application. Various modifications, which would be readily apparent to one skilled in the art, are intended to be within the scope of the present application. The only limitations to the scope of the present application are set forth in the claims appended hereto.

## Claims

1. A method of audio control for a dual processor mobile device (100) having a radio processor (14;111) and an application processor (10; 138), the mobile device further including a polyphonic audio chip (12; 169), the polyphonic audio chip communicating with both the application processor and a highly integrated audio codec (50;165) having a voice codec, a multiplexer and an amplifier, the radio processor communicating with the highly integrated audio codec, the method comprising the steps of:
controlling the highly integrated audio codec from one of the application processor and the radio processor,
**characterized in**
synchronizing the application processor and the radio processor by sending commands via a communications link (60) between the application processor (10, 138) and the radio processor (14, 111),
the commands indicating to the radio processor (14, 111) that the application processor (10, 138) wishes to take control of the highly integrated audio codec (50; 165) or that the application processor is done with the highly integrated audio codec (50; 165).

2. The method of claim 1, wherein the sending commands comprises a command specifying the audio input source at the highly integrated audio codec (50; 165).

3. The method of claim 1 or claim 2, wherein the sending commands comprises a command to tell the highly integrated audio codec (50; 165) to accept and process audio from the audio input source.

4. The method of any one of claims 1 to 3, wherein the sending commands comprises specifying the audio output destination to the highly integrated audio codec (50; 165).

5. The method of any one of claims 1 to 4, wherein the sending commands comprises specifying the output volume to the highly integrated audio codec (50; 165).

6. The method of claim 4 or claim 5, wherein the sending commands first sends the command specifying the audio output destination before sending commands specifying the audio input source and to accept and process audio from the audio input source.

7. The method of any of claims 1 to 6, wherein the sending commands step involves sending modem commands.

8. The method of claim 4, wherein the audio output destination comprises any of a speaker (16; 170), a handset (20; 172), a headset (20; 168) and/or a Bluetooth^{™} (70; 167) output.

9. A mobile device (100) having improved audio management, the mobile device comprising:
a radio subsystem (112, 113, 114, 116, 118) adapted to communicate with a network (119);
a radio processor (14; 111) having a digital signal processor (120) and adapted to interact with said radio subsystem:
an application processor (10; 138) adapted to run user applications, the application processor further adapted to interact with memory (136, 140), a display (122) and keyboard (132);
a highly integrated audio codec (50; 165), having a voice codec, a multiplexer and an amplifier, adapted to interact with audio output means (16, 18, 20, 70; 167, 168, 170, 172) and further adapted to interact with said radio processor,
a polyphonic audio chip (12; 169) adapted to communicate with said application processor and said highly integrated audio codec; and
**characterized in** further comprising
a communications link (60) between the application processor and radio processor, said communications link adapted to allow synchronization of said application processor and radio processor by sending commands via said communications link between the application processor and radio processor, the commands indicating to the radio processor (14, 111) that the application processor (10, 138) wishes to take control of the highly integrated audio codec (50; 165), or, that the application processor is done with the highly integrated audio codec (50; 165).

10. The mobile device (100) of claim 9, wherein said audio output means comprises any one or a combination of a speaker (16; 170), a handset (20; 172), a headset (18; 168) and/or a Bluetooth^{™} (70; 167) output.

11. The mobile device (100) of claim 9 or claim 10, wherein the command specifies the audio input source at the highly integrated audio codec (50; 165).

12. The mobile device (100) of any one of claims 9 to 11, wherein the command sent over said communications link (60) specifies to the highly integrated audio codec (50; 165) to accept and process audio from the audio input source.

13. The mobile device (100) of any one of claims 9 to 12, wherein the command sent over said communications link (60) specifies the audio output destination for the highly integrated audio codec (50; 165).

14. The mobile device of (100) any one of claims 9 to 13, wherein the command sent over said communications link (60) specifies the output volume for the highly integrated audio codec (50; 165).

15. The mobile device (100) of claim 14, wherein a first command specifies the audio output destination before a second command specifies the audio input source and to accept and process audio from the audio input source.

16. The mobile device (100) of any of claims 9 to 15, wherein the communications link (60) uses modem communications.

17. A computer program product for controlling audio in a dual processor mobile device (100) having one processor as a radio processor (14; 111) and one processor as an application processor (10; 138), the mobile device further comprising a polyphonic audio chip (12; 169), the computer program product comprising a computer readable medium (140) embodying program code means for implementing in the mobile device the method of any one of claims 1 to 8.

18. A wireless communication system comprising a plurality of mobile devices (100) of any one of claims 9 to 16.

## Patentansprüche

1. Verfahren zur Audiosteuerung für eine Dualprozessor-Mobilvorrichtung (100) mit einem Funkprozessor (14; 111) und einem Anwendungsprozessor (10; 138), wobei die Mobilvorrichtung ferner einen Polyphonaudiochip (12; 169) aufweist, der sowohl mit dem Anwendungsprozessor als auch mit einem hochintegrierten Audiocodec (50; 165) kommuniziert, der einen Sprachcodec, einen Multiplexer und einen Verstärker aufweist, wobei der Funkprozessor mit dem hochintegrierten Audiocodec kommuniziert, wobei in dem Verfahren:
der hochintegrierte Audiocodec vom Anwendungsprozessor oder dem Funkprozessor gesteuert wird,
**dadurch gekennzeichnet, dass**
der Anwendungsprozessor und der Funkprozessor synchronisiert werden, indem Befehle über einen Kommunikationslink (60) zwischen dem Anwendungsprozessor (10, 138) und dem Funkprozessor (14, 111) gesendet werden, wobei die Befehle dem Funkprozessor (14, 111) anzeigen, dass der Anwendungsprozessor (10, 138) die Kontrolle über den hochintegrierten Audiocodec (50; 165) zu übernehmen wünscht oder dass der Anwendungsprozessor mit dem hochintegrierten Audiocodec (50; 165) fertig ist.

2. Verfahren nach Anspruch 1, wobei das Senden von Befehlen das Senden eines Befehls umfasst, der die Audioeingabequelle am hochintegrierten Audiocodec (50; 165) festlegt.

3. Verfahren nach Anspruch 1 oder 2, wobei das Senden von Befehlen das Senden eines Befehls umfasst, den hochintegrierten Audiocodec (50; 165) zu beauftragen, Audio von der Audioeingabequelle zu akzeptieren und zu verarbeiten.

4. Verfahren nach irgendeinem der Ansprüche 1 bis 3, wobei das Senden von Befehlen umfasst, dass das Audioausgabeziel für den hochintegrierten Audiocodec (50; 165) festgelegt wird.

5. Verfahren nach einem der Ansprüche 1 bis 4, wobei das Senden von Befehlen umfasst, dass die Ausgabelautstärke für den hochintegrierten Audiocodec (50; 165) festgelegt wird.

6. Verfahren nach Anspruch 4 oder 5, wobei das Senden von Befehlen umfasst, dass erst der Befehl gesendet wird, der das Audioausgabeziel festlegt, bevor Befehle gesendet werden, welche die Audioeingabequelle und, dass Audio von der Audioeingabequelle akzeptiert und verarbeitet wird, festlegen.

7. Verfahren nach einem der Ansprüche 1 bis 6, wobei beim Senden von Befehlen Modembefehle gesendet werden.

8. Verfahren nach Anspruch 4, wobei das Audioausgabeziel einen Lautsprecher (16; 170), einen Hörer (20; 172), ein Headset (20; 168) und/oder eine Ausgabe mit Bluetooth™ (70; 167) aufweist.

9. Mobilvorrichtung (100) mit verbesserter Audioverwaltung, wobei die Mobilvorrichtung Folgendes aufweist:
ein Funkteilsystem (112, 113, 114, 116, 118), das dazu ausgelegt ist,
mit einem Netz (119) zu kommunizieren,
einen Funkprozessor (14; 111), der einen Digitalsignalprozessor (120) aufweist und dazu ausgelegt ist, mit dem Funkteilsystem zu interagieren, einen Anwendungsprozessor (10; 138), der dazu ausgelegt ist,
Benutzeranwendungen laufen zu lassen, wobei der Anwendungsprozessor ferner dazu ausgelegt ist, mit einem Speicher (136, 140), einer Anzeige (122) und einer Tastatur (132) zu interagieren,
einen hochintegrierten Audiocodec (50; 165) mit einem Sprachcodec,
einem Multiplexer und einem Verstärker, wobei der hochintegrierte Audiocodec dazu ausgelegt ist, mit einer Audioausgabeeinrichtung (16, 18, 20, 70; 167, 168, 170, 172) zu interagieren, und ferner dazu ausgelegt ist, mit dem Funkprozessor zu interagieren,
einen Polyphonaudiochip (12; 169), der dazu ausgelegt ist, mit dem Anwendungsprozessor und dem hochintegrierten Audiocodec zu kommunizieren, und
**dadurch gekennzeichnet ist, dass** sie ferner einen Kommunikationslink (60) zwischen dem Anwendungsprozessor und dem Funkprozessor aufweist, wobei der Kommunikationslink dazu ausgelegt ist, eine Synchronisation des Anwendungsprozessors und des Funkprozessors zu erlauben, indem Befehle über den Kommunikationslink zwischen dem Anwendungsprozessor und dem Funkprozessor gesendet werden, wobei die Befehle dem Funkprozessor (14, 111) anzeigen, dass der Anwendungsprozessor (10, 138) die Kontrolle über den hochintegrierten Audiocodec (50; 165) zu übernehmen wünscht oder dass der Anwendungsprozessor mit dem hochintegrierten Audiocodec (50; 165) fertig ist.

10. Mobilvorrichtung (100) nach Anspruch 9, wobei die Audioausgabeeinrichtung einen Lautsprecher (16; 170), einen Hörer (20; 172), ein Headset (18; 168) und/oder eine Ausgabe mit Bluetooth™ (70; 167) aufweist.

11. Mobilvorrichtung (100) nach Anspruch 9 oder 10, wobei der Befehl die Audioeingabequelle am hochintegrierten Audiocodec (50; 165) festlegt.

12. Mobilvorrichtung (100) nach einem der Ansprüche 9 bis 11, wobei der über den Kommunikationslink (60) gesendete Befehl dem hochintegrierten Audiocodec (50; 165) vorgibt, Audio von der Audioeingabequelle zu akzeptieren und zu verarbeiten.

13. Mobilvorrichtung (100) nach irgendeinem der Ansprüche 9 bis 12, wobei der über den Kommunikationslink (60) gesendete Befehl das Audioausgabeziel für den hochintegrierten Audiocodec (50; 165) festlegt.

14. Mobilvorrichtung (100) nach irgendeinem der Ansprüche 9 bis 13, wobei der über den Kommunikationslink (60) gesendete Befehl die Ausgabelautstärke für den hochintegrierten Audiocodec (50; 165) festlegt.

15. Mobilvorrichtung (100) nach Anspruch 14, wobei ein erster Befehl das Audioausgabeziel festlegt, bevor ein zweiter Befehl die Audioeingabequelle und, dass Audio von der Audioeingabequelle akzeptiert und verarbeitet wird, festlegt.

16. Mobilvorrichtung (100) nach irgendeinem der Ansprüche 9 bis 15, wobei der Kommunikationslink (60) Modemkommunikationen nutzt.

17. Computerprogrammprodukt zur Audiosteuerung in einer Dualprozessor-Mobilvorrichtung (100) mit einem Prozessor als Funkprozessor (14; 111) und einem Prozessor als Anwendungsprozessor (10; 138), wobei die Mobilvorrichtung ferner einen Polyphonaudiochip (12; 169) aufweist, wobei das Computerprogrammprodukt ein computerlesbares Medium (140), das eine Programmcodeeinrichtung zum Durchführen des Verfahrens nach irgendeinem der Ansprüche 1 bis 8 in einer Mobilvorrichtung verkörpert.

18. Drahtloses Kommunikationssystem mit mehreren Mobilvorrichtungen (100) nach irgendeinem der Ansprüche 9 bis 16.

## Revendications

1. Procédé de commande audio d'un dispositif mobile à double processeur (100) possédant un processeur radio (14 ; 111) et un processeur d'applications (10 ; 138), le dispositif mobile comprenant en outre une puce audio polyphonique (12 ; 169), la puce audio polyphonique communiquant à la fois avec le processeur d'applications et un codec audio hautement intégré (50 ; 165), qui compte un codec vocal, un multiplexeur et un amplificateur, le processeur radio communiquant avec le codec audio hautement intégré, le procédé comprenant l'étape consistant à :
commander le codec audio hautement intégré à partir d'un processeur parmi le processeur d'applications et le processeur radio ;
**caractérisé par** l'étape consistant à :
synchroniser le processeur d'applications et le processeur radio en envoyant des instructions sur une liaison de communication (60) entre le processeur d'applications (10 ; 138) et le processeur radio (14 ; 111), les instructions indiquant au processeur radio (14 ; 111) que le processeur d'applications (10 ; 138) souhaite prendre le contrôle du codec audio hautement intégré (50 ; 165) ou que le processeur d'applications a fini de travailler avec le codec audio hautement intégré (50 ; 165).

2. Procédé selon la revendication 1, dans lequel l'étape d'envoi d'instructions comprend une instruction qui spécifie la source d'entrée audio au niveau du codec audio hautement intégré (50 ; 165).

3. Procédé selon la revendication 1 ou la revendication 2, dans lequel l'étape d'envoi d'instructions comprend une instruction ordonnant au codec audio hautement intégré (50 ; 165) d'accepter et de traiter des signaux audio provenant de la source d'entrée audio.

4. Procédé selon l'une quelconque des revendications 1 à 3, dans lequel l'étape d'envoi d'instructions comprend le fait de spécifier au codec audio hautement intégré (50 ; 165) la destination de sortie audio.

5. Procédé selon l'une quelconque des revendications 1 à 4, dans lequel l'étape d'envoi d'instructions comprend le fait de spécifier au codec audio hautement intégré (50 ; 165) le volume de sortie.

6. Procédé selon la revendication 4 ou la revendication 5, dans lequel l'étape d'envoi d'instructions envoie d'abord les instructions spécifiant la destination de sortie audio avant d'envoyer des instructions spécifiant la source d'entrée audio et ordonnant d'accepter et de traiter les signaux audio de la source d'entrée audio.

7. Procédé selon l'une quelconque des revendications 1 à 6, dans lequel l'étape d'envoi d'instructions comprend l'envoi d'instructions de modem.

8. Procédé selon la revendication 4, dans lequel la destination de sortie audio comprend un élément quelconque parmi les suivants : haut-parleur (16 ; 170), combiné (20 ; 172), casque (20 ; 168) et/ou sortie Bluetooth™ (70 ; 167).

9. Dispositif mobile (100) avec gestion audio améliorée, le dispositif mobile comprenant :
un sous-système radio (112, 113, 114, 116, 118) conçu pour communiquer avec un réseau (119) ;
un processeur radio (14 ; 111) comptant un processeur de signal numérique (120) et conçu pour interagir avec ledit sous-système radio ;
un processeur d'applications (10 ; 138), conçu pour exécuter des applications de l'utilisateur, le processeur d'applications étant en outre conçu pour interagir avec de la mémoire (136, 140), un écran d'affichage (122) et un clavier (132) ;
un codec audio hautement intégré (50 ; 165), comptant un codec vocal, un multiplexeur et un amplificateur, conçu pour interagir avec des moyens de sortie audio (16, 18, 20, 70 ; 167, 168, 170, 172) et conçu en outre pour interagir avec ledit processeur radio ;
une puce audio polyphonique (12 ; 169), conçue pour communiquer avec ledit processeur d'applications et ledit codec audio hautement intégré ;
**caractérisé en ce qu'**il comprend en outre :
une liaison de communication (60) entre le processeur d'applications et le processeur radio, ladite liaison de communication étant conçue pour permettre la synchronisation desdits processeur d'applications et processeur radio en envoyant des instructions sur ladite liaison de communication entre le processeur d'applications et le processeur radio, les instructions indiquant au processeur radio (14 ; 111) que le processeur d'applications (10 ; 138) souhaite prendre le contrôle du codec audio hautement intégré (50 ; 165) ou que le processeur d'applications a fini de travailler avec le codec audio hautement intégré (50 ; 165).

10. Dispositif mobile (100) selon la revendication 9, dans lequel ledit moyen de sortie audio comprend un élément quelconque parmi les suivants, ou encore une combinaison de ceux-ci : haut-parleur (16 ; 170), combiné (20 ; 172), casque (20 ; 168) et/ou sortie Bluetooth™ (70 ; 167).

11. Dispositif mobile (100) selon la revendication 9 ou la revendication 10, dans lequel l'instruction spécifie au codec audio hautement intégré (50 ; 165) la source d'entrée audio.

12. Dispositif mobile (100) selon l'une quelconque des revendications 9 à 11, dans lequel l'instruction envoyée sur la liaison de communication (60) ordonne au codec audio hautement intégré (50 ; 165) d'accepter et de traiter le signal audio de la source d'entrée audio.

13. Dispositif mobile (100) selon l'une quelconque des revendications 9 à 12, dans lequel l'instruction envoyée sur ladite liaison de communication (60) spécifie la destination de sortie audio pour le codec audio hautement intégré (50 ; 165).

14. Dispositif mobile (100) selon l'une quelconque des revendications 9 à 13, dans lequel l'instruction envoyée sur la liaison de communication (60) spécifie le volume de sortie du codec audio hautement intégré (50 ; 165).

15. Dispositif mobile (100) selon la revendication 14, dans lequel une première instruction spécifie la destination de sortie audio avant qu'une seconde instruction spécifie la source d'entrée audio et ordonne d'accepter et de traiter les signaux audio de la source d'entrée audio.

16. Dispositif mobile (100) selon l'une quelconque des revendications 9 à 15, dans lequel la liaison de communication (60) utilise des communications modem.

17. Progiciel d'ordinateur destiné à commander la fonction audio sur un dispositif mobile à double processeur (100) comptant un processeur jouant le rôle de processeur radio (14 ; 111) et un processeur jouant celui de processeur d'applications (10 ; 138), le dispositif mobile comprenant en outre une puce audio polyphonique (12 ; 169), le progiciel d'ordinateur comprenant un support lisible par ordinateur (140) qui matérialise des moyens de code de programme destiné à mettre en oeuvre sur le dispositif mobile le procédé selon l'une quelconque des revendications 1 à 8.

18. Système de communication sans fil comprenant une pluralité de dispositifs mobiles (100) selon l'une quelconque des revendications 9 à 16.
